# EUROPEAN PATENT APPLICATION

(11) **EP 2 485 298 A1**
(43) Date of publication of application: **08.08.2012**
(21) Application number: 12153665.0
(22) Date of filing: 02.02.2012
(51) Int. Cl.: H01M 2/22, H01M 10/04, H01M 10/052, H01M 10/0585, H01M 2/26, H01M 10/0583

(54) **Stack type battery and method of manufacturing the same**

(30) Priority: 04.02.2011 JP 2011022738
(71) Applicant: Sanyo Electric Co., Ltd., Moriguchi-shi Osaka, 570-8677 (JP)
(72) Inventor: Shinyashiki, Yoshitaka, Moriguchi-shi, Osaka 5708677 (JP); Fujiwara, Masayuki, Moriguchi-shi, Osaka 5708677 (JP)
(74) Representative: Glawe, Delfs, Moll

(57) **Abstract**

A stack type battery has a stacked electrode assembly (10) having a plurality of positive electrode plates having respective positive electrode current collector leads (11) protruding therefrom, a plurality of negative electrode plates (2) having respective negative electrode current collector leads protruding therefrom, and separators (3a) interposed between the positive electrode plates (1) and the negative electrode plates (2). The stacked positive electrode current collector leads (11) and the stacked negative electrode current collector leads are bundled at one stacking direction-wise side of the stacked electrode assembly (10), and a portion of the bundled leads is bent toward the other stacking direction-wise side. The positive electrode current collector leads (11) or the negative electrode current collector leads are provided with a fastening tape (46) for retaining a portion of the bundled leads in a folded shape so as to be pulled toward the positive and negative electrode plates (1, 2).

## Description

### BACKGROUND OF THE INVENTION

### Field of the Invention

The present invention relates to a stack type battery and a method of manufacturing the battery.

### Description of Related Art

In recent years, batteries have been used for not only the power source of mobile information terminal devices such as mobile-phones, notebook computers, and PDAs but also for such applications as robots, electric vehicles, and backup power sources. This has led to a demand for higher capacity batteries. Because of their high energy density and high capacity, lithium-ion batteries are widely used as the power sources for such applications as described above.

The battery configurations of the lithium-ion batteries are broadly grouped into two types: one is a spirally-wound type lithium-ion battery, in which a spirally wound electrode assembly is enclosed in a battery case, and the other is a stack type lithium-ion battery (stack-type prismatic lithium ion battery), in which a stacked electrode assembly comprising a plurality of stacks of rectangular-shaped electrodes is enclosed in a battery can or a laminate battery case prepared by welding laminate films together.

Of the above-described lithium ion batteries, the stack type lithium-ion battery has a stacked electrode assembly having the following structure. The stacked electrode assembly has a required number of sheet-shaped positive electrode plates each having a positive electrode current collector lead and a required number of sheet-shaped negative electrode plates each having a negative electrode current collector lead protruding therefrom. The positive electrode plates and the negative electrode plates are stacked with separators interposed between the positive and negative electrode plates.

As disclosed in Japanese Published Unexamined Patent Application No. 2004-022534 (Patent Document 1) and Japanese Patent No. 4555549 (Patent Document 2), in the above-described lithium ion battery, the stacked positive and negative electrode current collector leads are bundled in such a manner as to be gathered at one stacking direction-wise side of the stacked electrode assembly, and the portions extending from the bundled portion to the tip side are bent toward the other stacking direction-wise side of the stacked electrode assembly. Thereby, the current collector leads as a whole are folded at an intermediate location of the protruding portion so that they are shortened along the protruding direction. Thus, the current collector leads do not occupy a large space, and as a result, the volumetric energy density does not decrease.

Moreover, in the above-described lithium ion battery, in order for the stacked electrode assembly to be compressed in the stacking direction by the atmospheric pressure, the interior of the laminate battery case is decompressed when enclosing the stacked electrode assembly into the laminate battery case. In this process, a problem arises that sharp edges or burrs, for example, of the metal in the positive and negative electrode current collector leads or in the welded portion between the positive and negative electrode current collector leads and the positive and negative electrode current collector terminals are pressed against and brought into contact with the laminate film of the battery case and cause damages to the laminate film, resulting in short circuiting with the aluminum foil inside the laminate film. In particular, in the case of the structure in which the positive and negative electrode current collector leads are bent in the above-described manner, such short circuiting is more likely to occur because sharp edges or burrs of the metal tend to form easily.

In view of the problem, Japanese Published Unexamined Patent Application No. 2004-022534 (Patent Document 1) and Japanese Patent No. 4555549 (Patent Document 2), for example, disclose the following structure. As is well shown in Fig. 10 of Patent Document 1, for example, the positive and negative electrode current collector leads or the welded portion between the positive and negative electrode current collector leads and the positive and negative electrode current collector terminals are covered from opposite sides by an insulating tape (147) made of a resin, to prevent short circuiting.

### CITATION LIST

[Patent Document 1] Japanese Published Unexamined Patent Application No. 2004-022534
[Patent Document 2] Japanese Patent No. 4555549

However, when employing the structure in which the positive and negative electrode current collector leads are bent as described above, the following problem arises. Since the bent portion has a tendency to unfold and return to the original condition, the positive and negative electrode current collector leads are likely to deform in such a manner as to extend in the protruding direction, so the positions of the positive and negative electrode current collector terminals protruding from the battery case are instable. In addition, as shown in Figs. 4 and 5 of Patent Document 1, for example, resin (142) is coated on the positive and negative electrode current collector terminals, which are joined to the positive and negative electrode current collector leads, so as to be interposed between the positive and negative electrode current collector terminals and the thermally welded portion (sealed part) of the laminate battery case, to prevent leakage of the electrolyte solution and short circuiting at this location. However, if the positive and negative electrode current collector leads deform during the manufacturing process so as to stretch outward in the protruding direction as described above, the resin (142) is accordingly pressed outward and moved out of the thermally welded portion of the laminate battery case, causing the positive and negative electrode current collector terminals to make direct contact with the laminate battery case and causing short circuiting easily.

Moreover, if the bent portion of the positive and negative electrode current collector leads unfolds easily, the laminate battery case forces open and enters the gap between the positive and negative electrode current collector leads that have been bent, when vacuum-sealing the laminate battery case. As a consequence, at that location, the laminate battery case is dent inwardly and creases are formed, which also causes damages to the laminate battery case and results in short circuiting. Furthermore, there is a risk that cracks may be formed in the laminate battery case, degrading the durability, or pinholes may be formed in the laminate battery case.

In the structures disclosed in Patent Documents 1 and 2, the insulating tape (147) is provided also on the inner side (i.e., the valley side) of the bent portion of the positive and negative electrode current collector leads so as to be bent together with the positive and negative electrode current collector leads. Accordingly, the shape-restoring capability of the insulating tape (147) encourages the deformation of the positive and negative electrode current collector leads such as to stretch them outward in the protruding direction, so the deformation is more likely to occur. Here, if the insulating tape (147) provided on the inner side (i.e., the valley side) of the bent portion is made thinner, the shape-restoring capability may be weakened; however, this is not a sufficient solution because the deformation of the positive and negative electrode current collector leads such as to stretch outward in the protruding direction may be alleviated somewhat but cannot be prevented.

### BRIEF SUMMARY OF THE INVENTION

In view of the foregoing circumstances, it is an object of the present invention to provide a stack type battery, as well as a method of manufacturing the battery, that can prevent misalignment of the current collector terminals and creases in the battery case effectively.

In order to accomplish the foregoing and other objects, the present invention provides a stack type battery comprising:
a stacked electrode assembly comprising a plurality of positive electrode plates having respective positive electrode current collector leads protruding therefrom, a plurality of negative electrode plates having respective negative electrode current collector leads protruding therefrom, and separators interposed between the positive electrode plates and the negative electrode plates, the positive electrode plates and the negative electrode plates being alternately stacked one another across the separators; wherein:
the stacked positive electrode current collector leads and the stacked negative electrode current collector leads are bundled in such a manner as to be gathered at one stacking direction-wise side of the stacked electrode assembly, and a portion of the bundled leads extending from a bundled portion toward a distal end of the bundled leads is bent toward the other stacking direction-wise side of the stacked electrode assembly; and
at least one of the positive electrode current collector leads and the negative electrode current collector leads is provided with a fastening means for retaining the portion of the bundled leads extending from the bundled portion toward the distal end of the bundled leads in a folded shape so as to be pulled toward the positive and negative electrode plates.

In order to accomplish the foregoing and other objects, the present invention also provides a method of manufacturing a stack type battery having a stacked electrode assembly comprising a plurality of positive electrode plates having respective positive electrode current collector leads protruding therefrom, a plurality of negative electrode plates having respective negative electrode current collector leads protruding therefrom, and separators interposed between the positive electrode plates and the negative electrode plates, the positive electrode plates and the negative electrode plates being alternately stacked one another across the separators, the method comprising:
a first step of bundling at least one of the stacked positive electrode current collector leads and the stacked negative electrode current collector leads in such a manner as to be gathered at one stacking direction-wise side of the stacked electrode assembly, and cutting an excess portion from a portion of the bundled leads extending from a bundled portion toward a distal end;
a second step of joining at least one of a positive electrode current collector terminal and a negative electrode current collector terminal to a distal end of at least one of the positive electrode current collector leads and the negative electrode current collector leads;
a third step of attaching an insulating tape from at least one side face to at least one joint portion of a joint portion between the positive electrode current collector leads and the positive electrode current collector terminal and a joint portion between the negative electrode current collector leads and the negative electrode current collector terminal;
a fourth step of bending, in a hook shape viewed from side, a portion of at least one of the positive electrode current collector terminal and the negative electrode current collector terminal that protrudes toward a distal end thereof from the joint portion between the positive electrode current collector leads and the positive electrode current collector terminal or the joint portion between the negative electrode current collector leads and the negative electrode current collector terminal; and
a fifth step of bending at least one of the joint portion between the positive electrode current collector leads and the positive electrode current collector terminal and the joint portion between the negative electrode current collector leads and the negative electrode current collector terminal so as to be substantially parallel to a stacking direction of the stacked electrode assembly, and attaching an insulating tape so as to straddle a gap between the stacked electrode assembly and at least one of the positive electrode current collector terminal and the negative electrode current collector terminal, or a gap between the stacked electrode assembly and an insulating layer formed on at least one of the positive electrode current collector terminal and the negative electrode current collector terminal.

The present invention makes it possible to effectively prevent misalignment of the current collector terminals and creases in the battery case in a stack type battery.

### BRIEF DESCRIPTION OF THE DRAWINGS

Fig. 1 shows portions of a stack type battery according to the present invention, wherein Fig. 1(a) is a plan view illustrating a positive electrode thereof, Fig. 1(b) is a perspective view illustrating a separator thereof, and Fig. 1(c) is a plan view illustrating a pouch-type separator thereof in which the positive electrode is disposed;
Fig. 2 is a plan view illustrating a negative electrode plate used for the stack type battery of the present invention;
Fig. 3 is an exploded perspective view illustrating a stacked electrode assembly used for the stack type battery according to the present invention;
Fig. 4 is a plan view illustrating the stacked electrode assembly used for the stack type battery according to the present invention;
Fig. 5 is a side view illustrating how the first step (bundling and cutting of positive and negative electrode current collector leads) in the manufacturing process of the stack type battery according to the present invention is carried out;
Fig. 6 is a side view illustrating how the second step (connecting of positive and negative electrode current collector terminals) in the manufacturing process of the stack type battery according to the present invention is carried out;
Fig. 7 is a side view illustrating how the third step (formation of an insulating layer) in the manufacturing process of the stack type battery according to the present invention is carried out;
Fig. 8 is a side view illustrating how the fourth step (bending of positive and negative electrode current collector terminals) in the manufacturing process of the stack type battery according to the present invention is carried out;
Fig. 9 is a side view illustrating how the fifth step (bending and positioning of positive and negative electrode current collector joint portions) in the manufacturing process of the stack type battery according to the present invention is carried out;
Fig. 10 is a plan view illustrating a stacked electrode assembly in which the positive and negative electrode current collector terminals are joined to the positive and negative electrode current collector leads;
Fig. 11 is a perspective view illustrating a battery case used for the stack type battery according to the present invention, in which the stacked electrode assembly is placed;

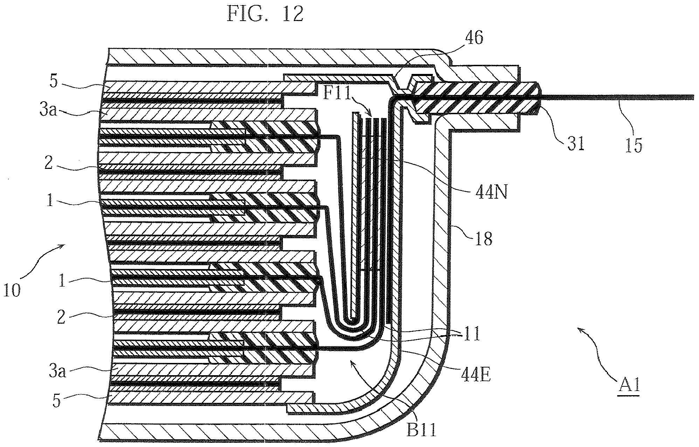

Fig. 12 is a schematic vertical cross-sectional view illustrating a positive electrode current collector portion of the stack type battery according to the present invention;
Fig. 13 is a schematic cross-sectional view taken along line D-D in Fig. 11.
Fig. 14 is a schematic partial cross-sectional view illustrating a stack type battery according to another embodiment of the present invention;
Fig. 15 is a schematic partial cross-sectional view illustrating a stack type battery according to yet another embodiment of the present invention;
Fig. 16 is a schematic partial cross-sectional view illustrating a stack type battery according to still another embodiment of the present invention; and
Fig. 17 is a schematic cross-sectional view illustrating another example of the positive electrode current collector terminal and the joining condition thereof.

### DETAILED DESCRIPTION OF THE INVENTION

According to one aspect, the present invention provides a stack type battery comprising: a stacked electrode assembly comprising a plurality of positive electrode plates having respective positive electrode current collector leads protruding therefrom, a plurality of negative electrode plates having respective negative electrode current collector leads protruding therefrom, and separators interposed between the positive electrode plates and the negative electrode plates, the positive electrode plates and the negative electrode plates being alternately stacked one another across the separators; wherein: the stacked positive electrode current collector leads and the stacked negative electrode current collector leads are bundled in such a manner as to be gathered at one stacking direction-wise side of the stacked electrode assembly, and a portion of the bundled leads extending from a bundled portion toward a distal end of the bundled leads is bent toward the other stacking direction-wise side of the stacked electrode assembly; and at least one of the positive electrode current collector leads and the negative electrode current collector leads is provided with a fastening means for retaining a portion of the bundled leads extending from the bundled portion toward the distal end of the bundled leads in a folded shape so as to be pulled toward the positive and negative electrode plates.

In the above-described configuration of the present invention, providing the fastening means allows the positive electrode current collector lead or the negative electrode current collector lead to be retained and positioned in a predetermined bent condition, and effectively prevents the deformation such as to stretch outward in the protruding direction in the state before the electrode assembly is enclosed in the battery case. Thus, it is made possible to prevent misalignment of the positive electrode current collector terminal or the negative electrode current collector terminal when sealing the laminate battery case. It is also made possible to effectively prevent the resin provided on the positive electrode current collector terminal or the negative electrode current collector terminal from moving out of the thermally welded portion, which causes short circuiting. Moreover, it is also made possible to effectively prevent the situation in which the laminate battery case forces open and enters the gap between the positive and negative electrode current collector leads that have been bent at the time of vacuum-sealing, which results in creases in the laminate battery case.

It is desirable that a positive electrode current collector terminal and a negative electrode current collector terminal having a hook shape (an L shape) viewed from side be respectively joined face to face to the positive electrode current collector leads and the negative electrode current collector leads, and the joined surfaces of the positive and negative electrode current collector leads and the positive and negative electrode current collector terminals be substantially parallel to a stacking direction of the stacked electrode assembly.

In the present invention, "the positive electrode current collector terminal and the negative electrode current collector terminal having a hook shape (an L shape) viewed from side" are not limited to ones having an angle of 90 degrees viewed from side, but may include ones having substantially a hook shape (an L shape) viewed from side. For example, ones having an angle of about 80 degrees to about 100 degrees viewed from side may be included.

With the above-described joining structure, the positive electrode current collector terminal and the negative electrode current collector terminal can be joined efficiently in a compact manner, making use of the portion of the positive electrode current collector lead or the negative electrode current collector lead that extends from the bundled portion to the distal end. Particularly, in the case of employing the above-described joining structure, it is useful to form a later-described insulating layer facing the battery case at the joint portions between the positive and negative electrode current collector leads and the positive and negative electrode current collector terminals because sharp edges at the joint portion are likely to damage the laminate battery case and cause short circuiting.

It is desirable that the fastening means be electrically insulative.

It is sufficient that the fastening means is capable of retaining the portion of the positive and negative electrode current collector leads extending from the bundled portion toward the distal end in a folded shape so as to be pulled toward the positive and negative electrode plates. However, if the fastening means is conductive, the distal end portions and the positive and negative electrode plate sides of the outermost positive and negative electrode current collector leads, to which the fastening means is joined, are electrically connected to each other, and accordingly, the terminal connection resistance in a region becomes lower than the terminal connection resistance in the other region, resulting in variations in the currents flowing into the electrode plates. In addition, if the fastening means is made of metal, for example, another problem arises that the fastening means itself is more apt to cause short circuiting with the laminate film of the battery case. In contrast, when the fastening means is insulative, the terminal connection resistance can be made uniform, and at the same time, the fastening means itself can be prevented from causing short circuiting with the laminate film of the battery case. Moreover, the fastening means can serve as an insulating layer for preventing short circuiting between metallic parts (the positive and negative electrode current collector leads, the positive and negative electrode current collector terminals, and so forth) and the laminate film.

An example of the fastening means is a member in, for example, a tape shape, a sheet shape, a plate shape, or a line shape that is arranged and secured so as to straddle a portion extending from the bundled portion to the distal end of the positive and negative electrode current collector leads, or a gap between the stacked electrode assembly and the positive and negative electrode current collector terminals. Especially when a tape-shaped fastening means is employed and this is affixed so as to straddle a gap between the stacked electrode assembly and the positive and negative electrode current collector terminals, the occupied space along the thickness can be made small, and the securing work can be done easily and simply.

Thus, it is desirable that the fastening means be an insulating tape, and that the insulating tape be provided so as to straddle a gap between the stacked electrode assembly and at least one of the positive electrode current collector terminal and the negative electrode current collector terminal, or a gap between the stacked electrode assembly and an insulating layer formed on at least one of the positive electrode current collector terminal and the negative electrode current collector terminal.

Specific examples of the insulating tape include a tape in which an adhesive material is coated on a substrate material, and a heat sealing tape. One end of the insulating tape may be affixed to the stacked electrode assembly, and the other end thereof may be affixed to either one or both of the positive and negative electrode current collector terminals and the insulating layer formed on the positive and negative electrode current collector terminals. An example of "the insulating layer formed on the positive and negative electrode current collector terminals" may be a resin sealing material (an adhesive material) formed so as to firmly adhere to the positive and negative electrode current collector terminals to ensure hermeticity in heat-sealing the battery case.

Alternatively, for example, an adhesive layer in a desired shape may be formed between the portion of the positive and negative electrode current collector leads extending from the bundled portion toward the distal end and the positive and negative electrode plate side of the positive and negative electrode current collector leads, so that the adhesive layer can join and secure the portion extending from the bundled portion toward the distal end of the positive and negative electrode current collector leads to the positive and negative electrode plate side. Alternatively, for example, the portion of the positive and negative electrode current collector leads extending from the bundled portion toward the distal end may be fixed in a folded shape so as to be pulled toward the positive and negative electrode plates by resin molding from inside and outside.

It is desirable that an insulating layer be formed on an inner side (i.e., a valley side) of a bent portion of at least one of the positive electrode current collector leads and the negative electrode current collector leads.

At the inner side (i.e., the valley side) of the bent portion of the positive and negative electrode current collector leads, the base end portion (the positive and negative electrode plate side) and the distal end portion of the positive and negative electrode current collector leads are brought into contact with each other, whereby electrical connection is established. Accordingly, the terminal connection resistance in a region becomes lower than the terminal connection resistance in the other region, so that variations tend to occur in the currents flowing into the electrode plates. Especially when the base end portion and the distal end portion of the positive and negative electrode current collector leads make surface contact with each other on their inner side surfaces (i.e., the valley side surfaces), a larger difference arises in the terminal connection resistance. Such current variations can be prevented by forming an insulating layer on the inner side (i.e., the valley side) of the bent portion of the positive and negative electrode current collector leads as described above.

The insulating layer may be such that an insulative resin is coated to form a layer on the inner side (i.e., the valley side) of the bent portion of the positive and negative electrode current collector leads. However, it is possible to form the insulating layer easily and simply when a tape made of an insulative resin is affixed to the inner side (i.e., the valley side) of the bent portion of the positive and negative electrode current collector leads.

It is desirable that an insulating layer facing the battery case be formed at one stacking direction-wise side of the stacked electrode assembly at which the bundled portion is positioned, near at least one of the positive electrode current collector leads and the negative electrode current collector leads.

The distal end portion of the positive and negative electrode current collector leads extending from the bundled portion toward the distal end, that is, the distal end portion in the opposite side to one stacking direction-wise side of the stacked electrode assembly in which the bundled portion is formed, is a portion in the valley side in which the positive and negative electrode current collector leads can unfold, and at this portion, the fastening means is provided to prevent the positive and negative electrode current collector leads from unfolding. When the fastening means is insulative, the fastening means can prevent short circuiting between metallic parts and the laminate film of the battery case as described above. On the other hand, in the side of the positive and negative electrode current collector leads in which the bundled portion is formed, that is, in the peak side of the positive and negative electrode current collector leads that have been bent, short circuiting between the positive and negative electrode current collector leads and the laminate film can be prevented as well by providing the insulating layer facing the battery case as described above.

The insulating layer formed on the portion of the positive and negative electrode current collector leads that faces the battery case and in the side in which the bundled portion is formed (hereinafter also referred to as the "outer insulating layer") may also be referred to as an insulating layer formed in the side opposite to the side in which the fastening means is provided, across the positive and negative electrode current collector leads that have been stacked. The configuration of this outer insulating layer may be the same as that of the insulating layer that is formed on the inner side (i.e., the valley side) of the bent portion of the positive and negative electrode current collector leads (hereinafter also referred to as the "inner insulating layer") as described above.

It is desirable that the inner insulating layer have a thickness of 40 µm or less.

With the just-described configuration, the bending process of the positive and negative electrode current collector leads can be conducted more easily, and moreover, the bent condition can be maintained easily after the processing.

It is desirable that the outer insulating layer have a thickness of 70 µm or greater.

With the just-described configuration, short circuiting between metallic parts and the laminate film can be prevented more reliably.

It is desirable that an insulating layer be formed on a region, facing the battery case, of at least one of a joint portion between the positive electrode current collector leads and the positive electrode current collector terminal and a joint portion between the negative electrode current collector leads and the negative electrode current collector terminal.

In this case, the insulating layer may be integrated with the outside insulating layer or may be a separate part. That is, for example, the joint portions between the positive and negative electrode current collector leads and the positive and negative electrode current collector terminals may be covered by the outside insulating layer, or the joint portions between the positive and negative electrode current collector leads and the positive and negative electrode current collector terminals may be covered by another insulating layer that is either in contact with or spaced from the outside insulating layer. Alternatively, it is possible to form only the insulating layer that covers the joint portions between the positive and negative electrode current collector leads and the positive and negative electrode current collector terminals and eliminate the outer insulating layer that covers the other portion.

Sharp edges, burrs, and the like of metal are likely to jut out at the joint portions between the positive and negative electrode current collector leads and the positive and negative electrode current collector terminals, so short circuiting with the laminate film is more apt to occur at the joint portions. Therefore, it is particularly beneficial to form an insulating layer between the joint portions and the battery case.

The present invention also provides, according to a second aspect, a stack type battery comprising:
a stacked electrode assembly comprising a plurality of positive electrode plates having respective positive electrode current collector leads protruding therefrom, a plurality of negative electrode plates having respective negative electrode current collector leads protruding therefrom, and separators interposed between the positive electrode plates and the negative electrode plates, the positive electrode plates and the negative electrode plates being alternately stacked one another across the separators; wherein:
the stacked positive electrode current collector leads and the stacked negative electrode current collector leads are bundled in such a manner as to be gathered at one stacking direction-wise side of the stacked electrode assembly, and a portion of the bundled leads extending from a bundled portion toward a distal end of the bundled leads is bent toward the other stacking direction-wise side of the stacked electrode assembly;
at least one of the positive electrode current collector leads and the negative electrode current collector leads is provided with a first insulating layer and a second insulating layer, the first insulating layer provided inside a bent portion and the second insulating layer provided at a portion facing a battery case; and
the thickness of the second insulating layer is greater than the thickness of the first insulating layer.

In the second aspect of the present invention, the thickness of the first insulating layer should be at least a thickness that is necessary for ensuring insulation (for example, about 10 µm or greater).

With the just-described configuration of the second aspect of the invention, the thickness of the first insulating layer, i.e., the inner insulating layer, formed on the inner side (i.e., the valley side) of the bent portion of the positive and negative electrode current collector leads is relatively smaller, so that the bending process of the positive and negative electrode current collector leads can be done easily and also the bent condition can be maintained even after the processing. Moreover, it is possible to relatively inhibit the deformation of the positive and negative electrode current collector leads that have been bent such as to unfold and stretch outward in the protruding direction.

On the other hand, the thickness of the second insulating layer, i.e., the outer insulating layer, formed on the portion of the positive and negative electrode current collector leads that faces the battery case is relatively large, so that short circuiting between the laminate film and the positive and negative electrode current collector leads can be prevented more reliably.

The first insulating layer (inner insulating layer) and the second insulating layer (outer insulating layer) may be an insulating layer formed by coating an insulative resin in a layer form. However, the insulating layers can be formed easily and simply by affixing a tape made of an insulative resin to a predetermined position.

In the second aspect of the invention, it is desirable that the first insulating layer (inner insulating layer) have a thickness of 40 µm or less.

With the just-described configuration, the bending process of the positive and negative electrode current collector leads can be conducted especially easily, and the bent condition can be maintained more easily after the processing. Moreover, it is possible to inhibit the deformation of the positive and negative electrode current collector leads that have been bent such as to unfold and stretch outward in the protruding direction more effectively.

In the second aspect of the invention, it is desirable that the second insulating layer (outer insulating layer) have a thickness of 70 µm or greater.

With the just-described configuration, short circuiting between the positive and negative electrode current collector leads and the laminate film can be prevented more reliably.

In the second embodiment of the invention, it is desirable that the battery capacity be 20 Ah or higher.

In the large-sized battery with a battery capacity of 20 Ah or higher, high current flows through the terminals and the temperature increase at the terminals tends to be more significant. Therefore, the configuration of the second aspect of the present invention, in which the thickness of the second insulating layer (outer insulating layer) is relatively greater, is particularly beneficial.

In the second aspect of the present invention, it is desirable that an insulating layer be formed on a region, facing the battery case, of at least one of a joint portion between the positive electrode current collector leads and the positive electrode current collector terminal and a joint portion between the negative electrode current collector leads and the negative electrode current collector terminal.

In this case, the insulating layer may be integrated with the second insulating layer (outside insulating layer) or may be a separate part therefrom. That is, for example, the joint portions between the positive and negative electrode current collector leads and the positive and negative electrode current collector terminals may be covered by the second insulating layer (outside insulating layer), or the joint portions between the positive and negative electrode current collector leads and the positive and negative electrode current collector terminals may be covered by another insulating layer that is either in contact with or spaced from the second insulating layer (outside insulating layer).

Sharp edges, burrs, and the like of metal are likely to jut out at the joint portions between the positive and negative electrode current collector leads and the positive and negative electrode current collector terminals, so short circuiting with the laminate film is more apt to occur at the joint portions. Therefore, it is particularly beneficial to form an insulating layer between the joint portions and the battery case.

In the second aspect of the present invention, it is desirable that a third insulating layer be formed on a portion facing the battery case that is on a side opposite to a side on which the second insulating layer is provided, across the positive electrode current collector leads or the negative electrode current collector leads.

The first insulating layer (inner insulating layer) may be formed by, for example, affixing a tape made of an insulative resin to a surface that later becomes the inner side (i.e., the valley side) the bent portion in advance of the bending process of the positive and negative electrode current collector leads. In this way, the first insulating layer (inner insulating layer) can be formed easily and simply, and the positive and negative electrode current collector leads can be easily covered by the insulating layer entirely (i.e., in such a manner that no exposed area remains), to prevent short circuiting more reliably. However, with this structure, the insulating layer formed of the insulating tape is bent together with the positive and negative electrode current collector leads, and it is inevitable that the insulating tape is folded in two layers. This makes the positive and negative electrode current collector leads difficult to bend correspondingly and encourages the deformation such as to unfold the bent portion after the processing. On the other hand, when the third insulating layer is formed on the side opposite to the side on which the second insulating layer is provided, across the stacked positive electrode current collector leads and the stacked negative electrode current collector leads as described above, the second insulating layer and the third insulating layer are formed on both sides of the stacked positive and negative electrode current collector leads, in other words, so as to sandwich the stacked positive and negative electrode current collector leads from both sides. As a result, on the valley side of the bent portion of the positive or negative electrode current collector leads, the second insulating layer or the third insulating layer is formed at a portion facing the battery case that is outward of the bent portion and tends to stretch outward, whereby short circuiting with the battery case can be prevented. Thus, the first insulating layer need not be formed so as to extend to the outside of the bent portion, and it is sufficient that the first insulating layer is formed only on the inside of the bent portion. Therefore, it is also possible to form the first insulating layer (inner insulating layer) on only one surface of the inner surfaces within the bent portion that face each other. This makes it possible to form the first insulating layer (inner insulating layer) so as to avoid the bending line portion (valley line portion). In addition, it is possible to prevent the first insulating layer (inner insulating layer) from being folded in two layers. As a result, the bending process of the positive and negative electrode current collector leads can be made more easily, the bent condition can be maintained easily after the processing, and the deformation can be alleviated.

In the second aspect of the invention, it is desirable that at least one of the positive electrode current collector leads and the negative electrode current collector leads be provided with a fastening means for retaining a portion of the bundled leads extending from the bundled portion toward the distal end of the bundled leads in a folded shape so as to be pulled toward the positive and negative electrode plates.

Here, for example, when the second insulating layer or the third insulating layer is formed of an insulative member, such as an insulating tape, that is arranged and secured so as to straddle (i.e., to be provided across) a gap between two sides of the bent portion that tend to unfold on the valley side of the bent portion of the positive or negative electrode current collector leads, the insulative member serving as the second insulating layer or the third insulating layer can also function as the fastening means. Of course, it is also possible to provide a fastening means separately from the insulating layer such as the second insulating layer or the third insulating layer. In that case, it is also possible to use, for example, a linear-shaped member, such as a rod-shaped material and a string-shaped material, because the fastening means does not need to cover the metallic parts superficially.

In the above-described configuration, providing the fastening means allows the positive electrode current collector lead or the negative electrode current collector lead to be retained and positioned in a predetermined bent condition, and more effectively prevents the deformation such as to stretch outward in the protruding direction in the state before the electrode assembly is enclosed in the battery case. Thus, it is made possible to prevent misalignment of the positive electrode current collector terminal or the negative electrode current collector terminal when sealing the laminate battery case. It is also made possible to effectively prevent the resin provided on the positive electrode current collector terminal or the negative electrode current collector terminal from moving out of the thermally welded portion, which causes short circuiting. Moreover, it is also made possible to more effectively prevent the situation in which the laminate battery case forces open and enters the gap between the positive and negative electrode current collector leads that have been bent at the time of vacuum-sealing, which results in creases in the laminate battery case.

The structure of the fastening means may be the same as described previously, so the description thereof will not be given further.

The present invention also provides a method of manufacturing a stack type battery having a stacked electrode assembly comprising a plurality of positive electrode plates having respective positive electrode current collector leads protruding therefrom, a plurality of negative electrode plates having respective negative electrode current collector leads protruding therefrom, and separators interposed between the positive electrode plates and the negative electrode plates, the positive electrode plates and the negative electrode plates being alternately stacked one another across the separators, the method comprising: a first step of bundling at least one of the stacked positive electrode current collector leads and the stacked negative electrode current collector leads in such a manner as to be gathered at one stacking direction-wise side of the stacked electrode assembly, and cutting an excess portion from a portion of the bundled leads extending from a bundled portion toward a distal end; a second step of joining at least one of a positive electrode current collector terminal and a negative electrode current collector terminal to a distal end of at least one of the positive electrode current collector leads and the negative electrode current collector leads; a third step of attaching an insulating tape from at least one side face to at least one joint portion of a joint portion between the positive electrode current collector leads and the positive electrode current collector terminal and a joint portion between the negative electrode current collector leads and the negative electrode current collector terminal; a fourth step of bending, in a hook shape viewed from side, a portion of at least one of the positive electrode current collector terminal and the negative electrode current collector terminal that protrudes toward a distal end thereof from the joint portion between the positive electrode current collector leads and the positive electrode current collector terminal or the joint portion between the negative electrode current collector leads and the negative electrode current collector terminal; and a fifth step of bending at least one of the joint portion between the positive electrode current collector leads and the positive electrode current collector terminal and the joint portion between the negative electrode current collector leads and the negative electrode current collector terminal so as to be substantially parallel to a stacking direction of the stacked electrode assembly, and attaching an insulating tape so as to straddle a gap between the stacked electrode assembly and at least one of the positive electrode current collector terminal and the negative electrode current collector terminal, or a gap between the stacked electrode assembly and an insulating layer formed on at least one of the positive electrode current collector terminal and the negative electrode current collector terminal.

According to the above-described method of the present invention, in the fifth step, the insulating tape is attached so as to straddle a gap between the stacked electrode assembly and the positive or negative electrode current collector terminal, or a gap between the stacked electrode assembly and the insulating layer formed on the positive or negative electrode current collector terminal. As a result, the positive electrode current collector lead or the negative electrode current collector lead can be retained and positioned in a predetermined bent condition, and the deformation such as to stretch outward in the protruding direction in the state before the electrode assembly is enclosed in the battery case can be prevented effectively. Thus, it is made possible to prevent misalignment of the positive electrode current collector terminal or the negative electrode current collector terminal when sealing the laminate battery case. It is also made possible to effectively prevent the resin provided on the positive electrode current collector terminal or the negative electrode current collector terminal from moving out of the thermally welded portion, which causes short circuiting. Moreover, it is also made possible to effectively prevent the situation in which the laminate battery case forces open and enters the gap between the positive and negative electrode current collector leads that have been bent at the time of vacuum-sealing, which results in creases in the laminate battery case. In other words, the insulating tape that is provided in the fifth step is allowed to function as the fastening means of the first aspect of the invention.

Moreover, the method according to the present invention makes it possible to manufacture the stack type battery according to the first aspect of the invention efficiently and easily.

### DESCRIPTION OF PREFERRED EMBODIMENTS

Hereinbelow, with reference to the drawings, the present invention is described in further detail based on certain embodiments and examples thereof. It should be construed, however, that the present invention is not limited to the following embodiments and examples, and various changes and modifications are possible without departing from the scope of the invention.

### FIRST EMBODIMENT

### Preparation of Positive Electrode

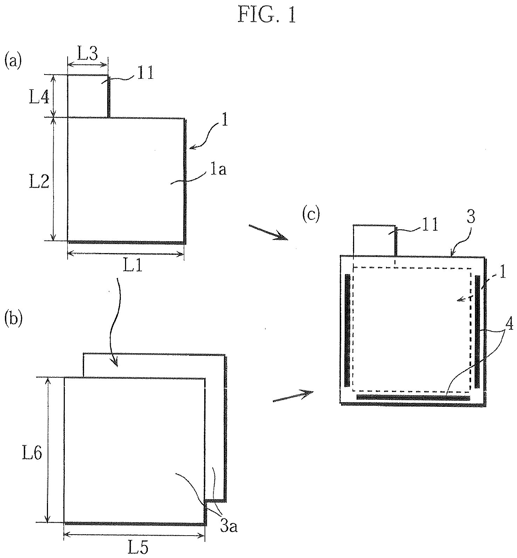

90 mass % of LiCoO₂ as a positive electrode active material, 5 mass % of carbon black as a conductive agent, and 5 mass % of polyvinylidene fluoride as a binder agent were mixed with an N-methyl-2-pyrrolidone (NMP) solution as a solvent to prepare a positive electrode mixture slurry. The resultant positive electrode slurry was applied onto both sides of an aluminum foil (thickness: 15 µm) serving as a positive electrode current collector. Thereafter, the material was heated to remove the solvent and compressed with rollers to a thickness of 0.1 mm Subsequently, as illustrated in Fig. 1(a), it was cut into pieces each having a width L1 of 85 mm and a height L2 of 85 mm, to prepare positive electrode plates 1 each having a positive electrode active material layer 1 a on each side. At this point, in each of the positive electrode plates 1, an active material-uncoated portion having a width L3 = 30 mm and a height L4 = 20 mm was allowed to protrude outwardly from one end (the left end in Fig. 1(a)) of one side of the positive electrode plate 1 that extends along the width L1, to form a positive electrode current collector lead 11.

### Preparation of Negative Electrode

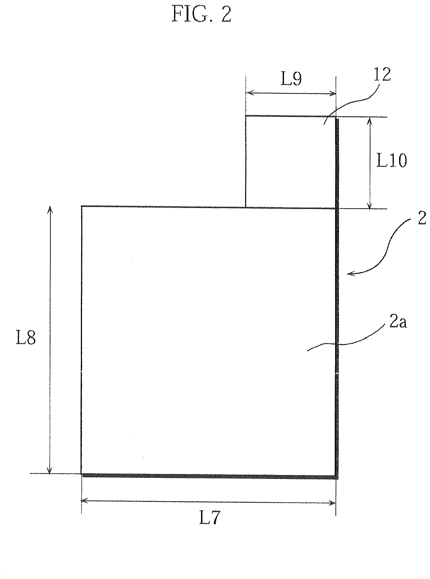

96 mass % of graphite powder as a negative electrode active material, and 2 mass % of carboxymethylcellulose (CMC) and 2 mass % of styrene-butadiene rubber (SBR) as binder agents were mixed with pure water as a solvent, to form a negative electrode slurry. The resultant negative electrode slurry was applied onto both sides of a copper foil (thickness: 10 µm) serving as a negative electrode current collector. Thereafter, the material was heated to remove the solvent and compressed with rollers to a thickness of 0.08 mm. Subsequently, as illustrated in Fig. 2, it was cut into pieces each having a width L7 of 90 mm and a height L8 of 90 mm, to prepare negative electrode plates 2 each having a negative electrode active material layer 2a on each side. At this point, in each of the negative electrode plates 2, an active material-uncoated portion having a width L9 of 30 mm and a height L10 of 20 mm was allowed to protrude outwardly from one end (the right end in Fig. 2) of the negative electrode plate 2 that is opposite to the side end thereof at which the positive electrode lead 11 was formed, in one side of the negative electrode plate 2 that extends along the widthwise direction, to form a negative electrode lead 12.

### Preparation of Pouch-shaped Separator in which the Positive Electrode Plate is Disposed

The positive electrode plate 1 was disposed between two square-shaped polypropylene (PP) separators 3a (thickness: 30 µm) as illustrated in Fig. 1(b), each having a width L5 of 90 mm and a height L6 of 94 mm. Thereafter, as illustrated in Fig. 1(c), the three sides of the separators 3a, other than the side from which the positive electrode current collector lead 11 protrudes, were thermally sealed at a sealing part 4, to prepare a pouch-type separator 3, in which the positive electrode plate 1 was accommodated.

The separator 3a is shaped so that the height L6 = 94 mm is 4 mm greater than the height L8 = 90 mm of the negative electrode plate 2. Therefore, the separator 3a protrudes from the pouch-type separator 3 over the negative electrode plate 2 in the direction in which the positive electrode current collector lead 11 protrudes. This makes the short circuiting resulting from misalignment of the negative electrode plate 2 more unlikely to occur.

At this point, an insulative resin is coated on both sides of the base end portion (base portion) of the positive electrode current collector lead 11 of the positive electrode plate 1, to form an insulating layer (not shown) for preventing the negative electrode plate 2 from making contact with the base end portion (base portion) of the positive electrode current collector lead 11 and causing short circuiting, for example, when the negative electrode plate 2 is moved outside the separator 3a.

### Preparation of Stacked Electrode Assembly

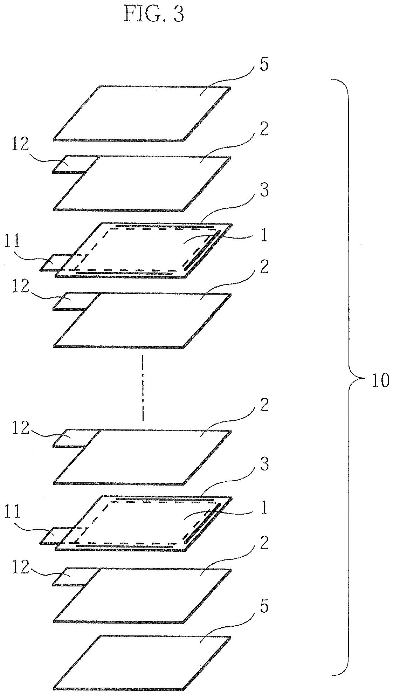

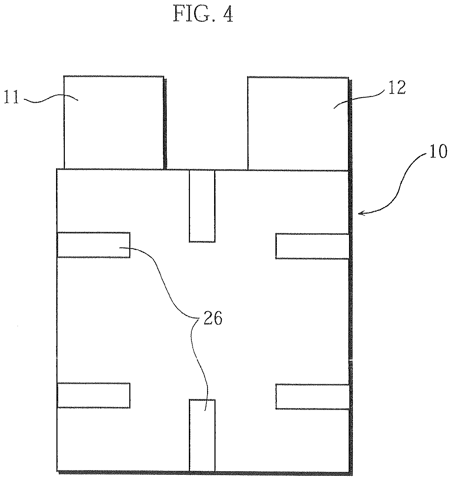

35 sheets of the pouch-shaped separators 3 in each of which the positive electrode plate 1 was disposed and 36 sheets of the negative electrode plates 2 were prepared, and the pouch-shaped separators 3 and the negative electrode plates 2 were alternately stacked one on the other, as illustrated in Fig. 3. Then, negative electrode plates 2 were placed at both stacking direction-wise ends of the stack, and insulating sheets 5 made of polypropylene (PP) and having the same dimensions and the same shape as the separator 3a were disposed on respective further outer sides thereof. Subsequently, as illustrated in Fig. 4, the top and bottom faces of the stacked component were connected by insulating tapes 26 for retaining its shape. Thus, a stacked electrode assembly 10 was obtained.

### Shaping and Connecting of Current Collectors

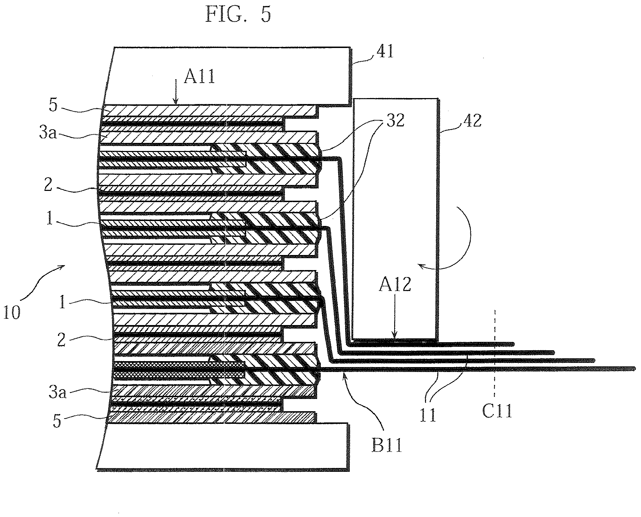

Shaping (bundling, cutting, bending, etc.) of the positive and negative electrode current collector leads 11 and 12 of the stacked electrode assembly 10 and connecting thereof with the positive and negative electrode current collector terminals 15 and 16 were carried out according to the following steps a) through e). It should be noted that although the following description and in Figs. 5 through 9, which schematically show the manufacturing process, basically illustrate processing of the positive electrode side (positive electrode current collector leads 11 and a positive electrode current collector terminal 15), the negative electrode side is also processed in a like manner.
a) First step (Bundling and cutting of positive and negative electrode current collector leads)

As illustrated in Fig. 5, while the stacked electrode assembly 10 was being retained by a workpiece clamp 41 such as to be sandwiched and compressed from the top and the bottom as indicated by arrow A11, the stacked positive electrode current collector leads 11 were collectively pressed downward from the top using a bundling head 42, as indicated by arrow A12. In this way, the stacked positive electrode current collector leads 11 were bundled in such a manner as to be gathered at one stacking direction-wise side (the lower side in Fig. 5) of the stacked electrode assembly 10. Subsequently, an excess portion was cut off from the portion of the positive electrode current collector leads 11 extending from a bundled portion B 11 toward the distal end thereof, so that the distal ends were at the same position.

Note that reference numeral 32 in Fig. 5 denotes the above-described insulating layer formed on both sides of the base end portion (base portion) of each of the positive electrode current collector leads 11 of the positive electrode plates 1.
b) Second step (Connecting positive and negative electrode current collector terminals)

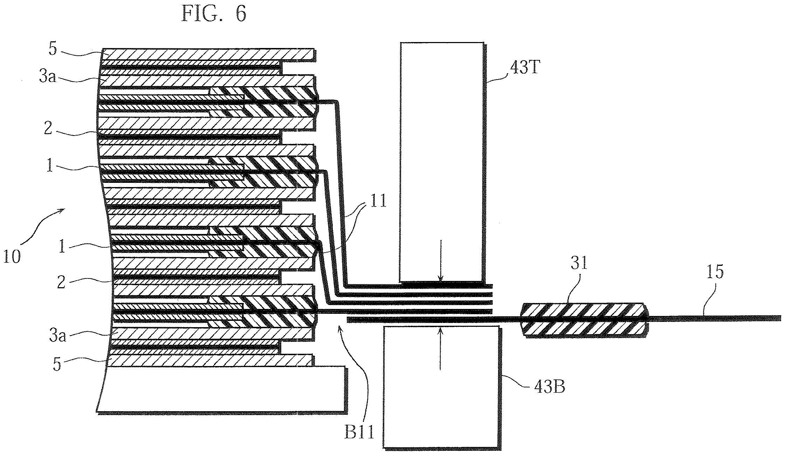

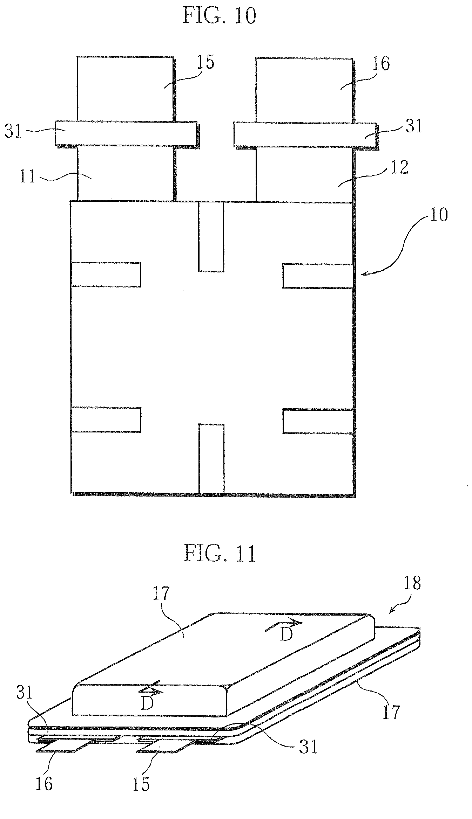

As illustrated in Fig. 6, a 4-mm portion of the positive electrode current collector terminal 15 near the positive or negative electrode plates 1 and 2 was disposed so as to be layered on the portion of the positive electrode current collector leads 11 extending from the bundled portion B11 toward the distal end from the bottom. In this condition, an ultrasonic horn 43T and an anvil 43B were set to perform ultrasonic welding. Thereby, as illustrated in Fig. 10, the positive electrode current collector terminal 15 made of an aluminum plate having a width of 30 mm and a thickness of 0.4 mm and a negative electrode current collector terminal 16 made of a copper plate having a width of 30 mm and a thickness of 0.4 mm were joined to the respective distal end portions of the positive electrode current collector leads 11 and the negative electrode current collector leads 12.

Note that reference numeral 31 shown in Figs. 6, 10, etc., denotes a resin sealing material (adhesive material), formed so as to be firmly bonded to each of the positive and negative electrode current collector terminals 15 and 16 in a strip shape along the widthwise direction, for ensuring hermeticity when heat-sealing a later-described battery case 18.
c) Third step (Formation of insulating layer)

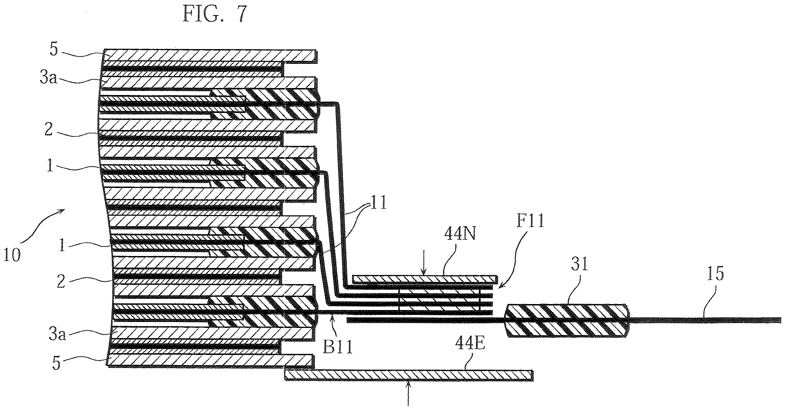

As illustrated in Fig. 7, a polyimide insulating tape 44N of 30 mm × 5 mm × thickness 35 µm was attached onto one side face (the upper side face in Fig. 7) of the positive electrode current collector leads 11, at the joint portion F11 between the positive electrode current collector leads 11 and the positive electrode current collector terminal 15 (hereinafter also referred to as the "positive electrode current collector joint portion"), to form an insulating layer (hereinafter also referred to as the "inner insulating layer 44N"). Likewise, a polyimide insulating tape 44E of 30 mm × 12 mm × thickness 70 µm was attached to the other side face (the lower side face in Fig. 7) of the positive electrode current collector terminal 15, to form an insulating layer (hereinafter also referred to as the "outer insulating layer 44E").

At this time, the insulating tape 44N serving as the inner insulating layer 44N was affixed so as to cover a portion of the positive electrode current collector leads 11 from near the bundled portion B11 to a location slightly outward the distal end thereof. The insulating tape 44E serving as the outer insulating layer 44E was affixed in such a manner that a portion thereof near the positive and negative electrode plates 1 and 2 (near the base end portion side of the positive electrode current collector leads 11) slightly overlaps an edge portion of one stacking direction-wise side face of the stacked electrode assembly 10 (i.e., the lower surface of the lower insulating sheet 5 in Fig. 5) and that a portion thereof near the current collector protruding side (near the distal end of the positive electrode current collector leads 11) overlaps the positive electrode current collector terminal 15 and an end portion of the resin sealing material 31 (adhesive material). Thus, the metallic part of one side face (the upper side face in Fig. 7) of the positive electrode current collector leads 11, which is one side face of the positive electrode current collector joint portion F11, is almost entirely covered by the insulating tape 44N serving as the inner insulating layer 44N. In addition, in the other side face (the lower side face in Fig. 7) of the positive electrode current collector terminal 15, the gap between the insulating sheet 5 of the stacked electrode assembly 10 and the resin sealing material 31 (adhesive material) of the positive electrode current collector terminal 15 was entirely covered so that the metallic part would not be exposed.
d) Fourth step (Bending of the positive and negative electrode current collector terminals)

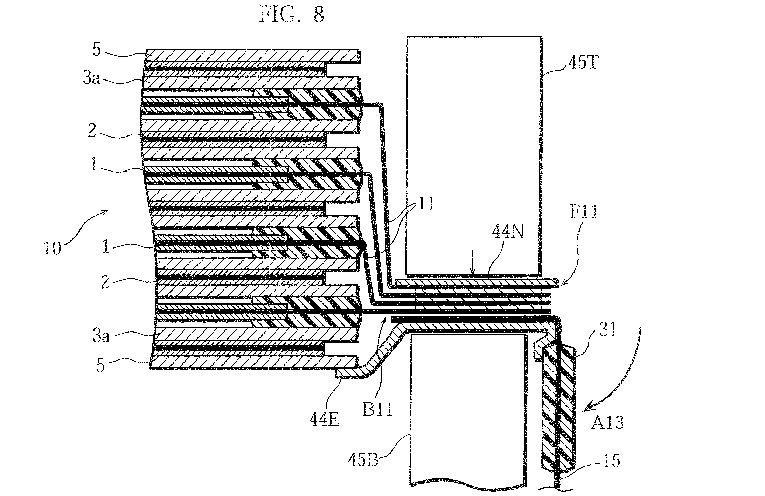

As illustrated in Fig. 8, while the positive electrode current collector joint portion F11 was being retained so as to be pressed from the top and the bottom by retaining members 45T and 45B, a portion of the positive electrode current collector terminal 15 that protrudes from the positive electrode current collector joint portion F11 toward the distal end, i.e., the portion of the positive electrode current collector terminal 15 extending from the position at 8 mm from the side edge near the positive and negative electrode plates 1 and 2 (the side edge near the stacked electrode assembly 10) toward the current collector protruding side (toward the distal end), was bent outward (downward in Fig. 8) in a hook shape viewed from side (i.e., in an L shape) as indicated by arrow A13.
e) Fifth step (Bending and positioning of positive and negative electrode current collector joint portions)

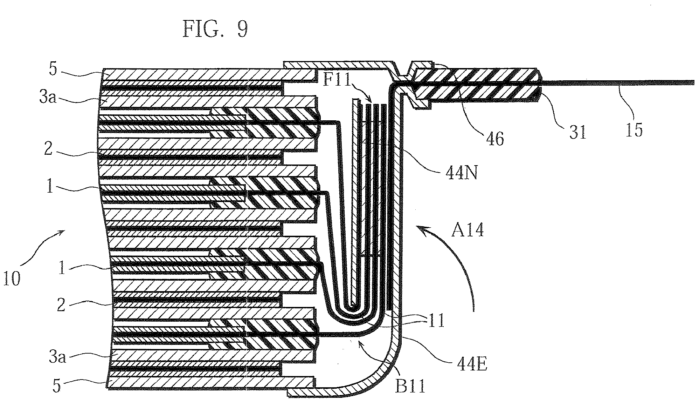

As illustrated in Fig. 9, the positive electrode current collector joint portion F11 was bent inward (upward in Fig. 8), as indicated by arrow A14, at a portion nearer the positive and negative electrode plates 1 and 2 (the base end portion of the positive electrode current collector leads 11) than the positive electrode current collector joint portion F11 so that the positive electrode current collector joint portion F11 would be substantially parallel to the stacking direction (the vertical direction in Fig. 9) of the stacked electrode assembly 10. Next, a polyimide insulating tape 46 (hereinafter also referred to as the "fastening tape") of 30 mm × 10 mm × thickness 35 µm was attached from the distal end direction (from the top in Fig. 8) of the positive electrode current collector joint portion F11 so as to straddle a gap between the positive electrode current collector terminal 15 and the stacked electrode assembly 10, whereby the positive electrode current collector leads 11 were retained and positioned in a predetermined bent condition.

At this time, the positive electrode current collector joint portion F11, in which the positive electrode current collector terminal 15 made of a thick metal plate exists, and a further distal end portion therefrom are bent at a position between the positive electrode current collector joint portion F11 and the positive and negative electrode plates 1 and 2 (i.e., at the bundled portion B11 or in the vicinity thereof) in which only the positive electrode current collector leads 11 of stacked metal foils exist. Therefore, the positive electrode current collector joint portion F11 and the further distal end portion therefrom can be easily bent together with the positive electrode current collector terminal 15.

Also at this time, a portion of the fastening tape 46 near the positive or negative electrode plates 1 and 2 (near the base end portion of the positive electrode current collector leads 11) was affixed so as to slightly overlap an edge portion of the other stacking direction-wise side face (i.e., the upper face of the upper insulating sheet 5 in Fig. 9) of the stacked electrode assembly 10. On the other hand, a portion of the fastening tape 46 near the current collector protruding side (near the distal end of the positive electrode current collector leads 11) was affixed so as to overlap a portion of the positive electrode current collector terminal 15 and an end portion of the resin sealing material 31 (adhesive material). Thereby, in the distal end portion (the upper portion in Fig. 9) of the positive electrode current collector joint portion F11, the gap between the insulating sheet 5 of the stacked electrode assembly 10 and the resin sealing material 31 (adhesive material) of the positive electrode current collector terminal 15 was entirely covered so that the metallic part would not be exposed.

### Placing the Electrode Assembly in Battery Case

As illustrated in Fig. 11, the above-described stacked electrode assembly 10 was inserted into a battery case 18 formed of laminate films 17, which had been shaped in advance so that the stacked electrode assembly 10 could be placed therein. Then, the peripheral sides of the battery case 18, except for the peripheral side in which the positive electrode current collector terminal 15 and the negative electrode current collector terminal 16 were placed, were thermally welded together so that only the positive electrode current collector terminal 15 and the negative electrode current collector terminal 16 would protrude outwardly from the battery case 18.

### Filling Electrolyte Solution and Sealing the Battery Case

An electrolyte solution was prepared by dissolving LiPF₆ at a concentration of 1 M (mol/L) in a mixed solvent of 30 : 70 volume ratio of ethylene carbonate (EC) and methyl ethyl carbonate (MEC). The electrolyte solution was filled into the battery case 18 from the one peripheral side of the battery case 18 that was not yet thermally welded. Lastly, the one peripheral side of the battery case 18 that had not been thermally welded was thermally welded, to prepare a battery A1.

### <Basic Structure and Advantageous Effects of Battery A1>

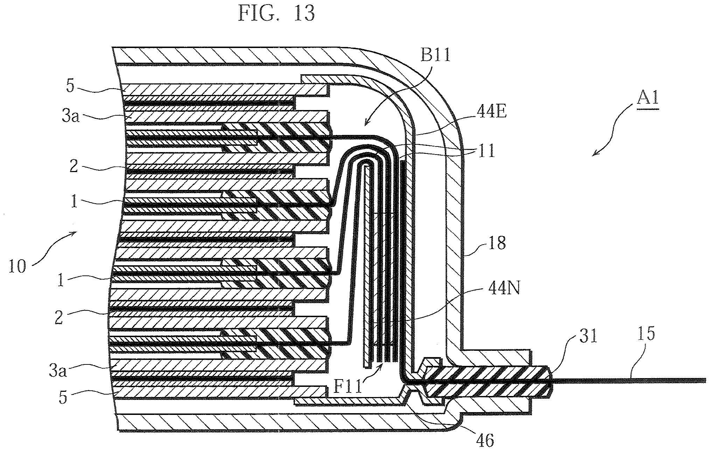

Fig. 13 is a schematic cross-sectional view taken along line D-D in Fig. 11. As illustrated in this figure, the battery A1 includes: a stacked electrode assembly 10 comprising a plurality (35 sheets) of positive electrode plates 1 having respective positive electrode current collector leads 11 protruding therefrom, a plurality (36 sheets) of negative electrode plates 2 having respective negative electrode current collector leads 12 protruding therefrom, and separators 3a interposed between the positive electrode plates 1 and the negative electrode plates 2, the positive electrode plates 1 and the negative electrode plates 2 being alternately stacked one another across the separators 3a; wherein: the stacked positive electrode current collector leads 11 and the stacked negative electrode current collector leads 12 are respectively bundled in such a manner as to be gathered at one stacking direction-wise side of the stacked electrode assembly 10, and a portion of the bundled leads extending from a bundled portion B11 toward a distal end of the bundled leads is bent toward the other stacking direction-wise side of the stacked electrode assembly 10; and both the positive electrode current collector leads 11 and the negative electrode current collector leads 12 is provided with a fastening tape 46 as a fastening means for retaining a portion of the bundled leads extending from the bundled portion B11 toward the distal end of the bundled leads in a folded shape so as to be pulled toward the positive and negative electrode plates 1 and 2.

In the above-described configuration of the battery A1, providing the fastening tape 46 as the fastening means allows the positive and negative electrode current collector leads 11 and 12 to be retained and positioned in a predetermined bent condition and effectively prevents the deformation such as to stretch outward in the protruding direction in the state before the electrode assembly is enclosed in the battery case. Thus, it is made possible to prevent misalignment of the positive electrode current collector terminal or the negative electrode current collector terminal when sealing the laminate battery case. It is also made possible to effectively prevent the resin sealing material 31 (adhesive material) provided on the positive and negative electrode current collector terminals from moving out of the thermally welded portion of the laminate battery case 18, which causes short circuiting. Moreover, it is also made possible to effectively prevent the situation in which the laminate film 17 of the battery case 18 forces open and enters the gap between the positive and negative electrode current collector leads 11 and 12 that have been bent at the time of vacuum-sealing, which results in creases in the battery case 18.

### SECOND EMBODIMENT

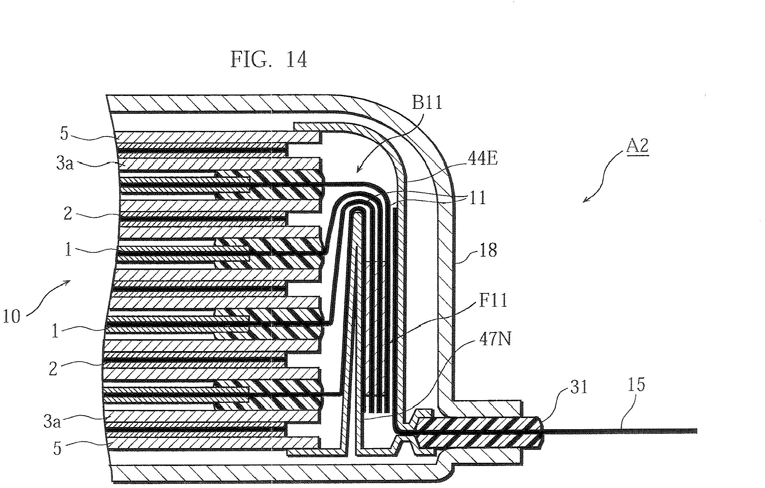

Figs. 14 through 16 are schematic partial cross-sectional views illustrating various types of stack type batteries according to other embodiments of the present invention. Figs. 14 through 16 are schematic partial cross-sectional views each showing a part corresponding to that shown in Fig. 13. As is clear from Figs. 14 through 16, many of the parts and components of various types of stack type batteries according to these other embodiments are basically the same as the parts and components in the first embodiment. For this reason, in the following description and Figs. 14 through 16, parts and components that are identical or similar to those described in the first embodiment above are denoted by like reference numerals, and the descriptions thereof will not be given except when necessary.

### <Basic Structure and Advantageous Effects of Battery A1>

In a battery A2 shown in Fig. 14, the fastening tape 46 as the fastening means in the first embodiment is not provided. Instead, an inner insulating layer 47N made of a 35 µm-thick insulating tape 47N is formed in such a manner that a portion thereof near the positive and negative electrode plates 1 and 2 (near the base end portion of the positive electrode current collector leads 11) extends to a location such as to slightly overlap an edge portion of one stacking direction-wise side face (the lower surface of the lower insulating sheet 5 in Fig. 14) the stacked electrode assembly 10, and that a portion thereof near the current collector protruding side (near the distal end of the positive electrode current collector leads 11) extends to a location such as to slightly overlap the resin sealing material 31 (adhesive material) of the positive electrode current collector terminal 15.

In the structure of the battery A2, the inner insulating layer 47N made of the insulating tape 47N is bent together with the positive and negative electrode current collector leads 11 and 12, in other words, it is folded in two layers; however, this inner insulating layer 47N is thin, the thickness being 35 µm, which is 1/2 of the thickness of the outer insulating layer 44E, 70 µm.

In other words, the battery A2 includes: a stacked electrode assembly 10 comprising a plurality (35 sheets) of positive electrode plates 1 having respective positive electrode current collector leads 11 protruding therefrom, a plurality (36 sheets) of negative electrode plates 2 having respective negative electrode current collector leads 12 protruding therefrom, and separators 3a interposed between the positive electrode plates 1 and the negative electrode plates 2, the positive electrode plates 1 and the negative electrode plates 2 being alternately stacked one another across the separators 3a; wherein: the stacked positive electrode current collector leads 11 and the stacked negative electrode current collector leads 12 are respectively bundled in such a manner as to be gathered at one stacking direction-wise side of the stacked electrode assembly 10, and a portion of the bundled leads extending from a bundled portion B11 toward a distal end of the bundled leads are bent toward the other stacking direction-wise side of the stacked electrode assembly 10; and both the positive electrode current collector leads 11 and the negative electrode current collector leads 12 are provided with an inner insulating layer 47N serving as a first insulating layer provided inside a bent portion and an outer insulating layer 44E serving as a second insulating layer provided at a portion facing a battery case 18; and the thickness of the outer insulating layer 44E (the second insulating layer) is greater than the thickness of the outer insulating layer 47N (the first insulating layer).

With the just-described structure of the battery A2, the thickness of the first insulating layer, i.e., the inner insulating layer 47N, formed on the inner side (i.e., the valley side) of the bent portion of the positive and negative electrode current collector leads 11 and 12 is relatively small (35 µm), so that the bending process of the positive and negative electrode current collector leads 11 and 12 can be done easily and also the bent condition can be maintained even after the processing. Moreover, it is made possible to relatively inhibit the deformation of the positive and negative electrode current collector leads 11 and 12 that have been bent such as to unfold and stretch outward in the protruding direction. On the other hand, the thickness of the second insulating layer, i.e., the outer insulating layer 44E, formed on the portion of the positive and negative electrode current collector leads 11 and 12 that faces the battery case 18 is relatively large (70 µm), so that short circuiting between the laminate film 17 and the positive and negative electrode current collector leads 11 and 12 can be prevented more reliably.

Furthermore, in the structure of the battery A1, the metallic part existing in the gap between the insulating sheet 5 of the stacked electrode assembly 10 and the resin sealing material 31 (adhesive material) of the positive electrode current collector terminal 15 is entirely covered by the inner insulating layer 47N so that the metallic part will not be exposed toward the distal end (downward in Fig. 14) of the positive electrode current collector joint portion F11. In other words, in the corresponding location of the first embodiment, the metallic part is entirely covered by the fastening tape 46 as the fastening means, and the fastening tape 46 also serves as the insulating layer for preventing short circuiting between the metallic part and the laminate film 17. In contrast, in the battery A1 according to another embodiment shown here, the portion of the inner insulating layer 47N that extends outward from the bent portion of the positive and negative electrode current collector leads 11 and 12 is configured to prevent short circuiting between the metallic part and the laminate film 17.

### <Battery A3>

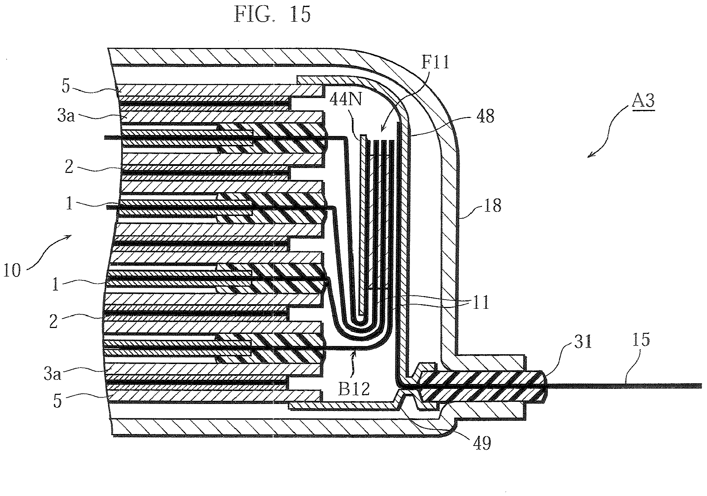

In a battery A3 shown in Fig. 15, the positive and negative electrode current collector leads 11 and 12 are bundled in such a manner as to be gathered to form a bundled portion B12 at the opposite side to that in the case of the first embodiment. In other words, in the structure of the first embodiment, only the stacked electrode assembly 10 (including the inner insulating layer 44N and the positive and negative electrode current collector leads 11 and 12) is arranged inside out (upside down in Fig. 15).

In the battery A3, in place of the outer insulating layer 44E of the first embodiment, an insulating layer 48 having the same configuration (hereinafter also referred to as the "thick-type insulating layer") is formed likewise. In addition, in place of the fastening tape 46 of the first embodiment, an insulating layer 49 having the same configuration (hereinafter also referred to as the "thin-type insulating layer") is formed likewise. In this case, the thick-type insulating layer 48 and the thin-type insulating layer 49 prevent short circuiting between the metallic part and the laminate film 17 in a similar manner to the outer insulating layer 44E and the fastening tape 46 of the first embodiment. In particular, the sharp edges of the distal end portions (the distal end portion pointing upward in Fig. 15) of the positive and negative electrode current collector terminals 15 and 16 located inside the battery case 18 are strongly pressed against and brought into contact with the laminate film 17 during vacuum-sealing, and consequently, short circuiting is likely to occur between the sharp edges and the laminate film 17. In view of this problem, the thick-type insulating layer 48 with a relatively large thickness, 70 µm, is provided at this location to prevent such short circuiting effectively. In this respect, the present embodiment is not different from the foregoing case of the first embodiment. In this case, however, the positive and negative electrode current collector leads 11 and 12 are bundled at the opposite side (the lower side in Fig. 15) to that in the case of the first embodiment, so the bent portion of the positive and negative electrode current collector leads 11 and 12 tends to unfold at the opposite side (the upper side in Fig. 15) to the bundled side. Thus, this embodiment is significantly different from the foregoing first embodiment in the respect that the unfolding of the bent portion is prevented by the thick-type insulating layer 48, in other words, the thick-type insulating layer 48, not the thin-type insulating layer 49, serves as the fastening means. In other words, the function as the fastening means is served by the thick-type insulating layer 48, not the thin-type insulating layer 49.

In the above-described configuration of the battery A3, as well as in the foregoing configuration of the battery A1, providing the fastening means (in this case the thick-type insulating layer 48) allows the positive and negative electrode current collector leads 11 and 12 to be retained and positioned in a predetermined bent condition, and effectively prevents the deformation such that the bent portion unfolds.

### <Battery A4>

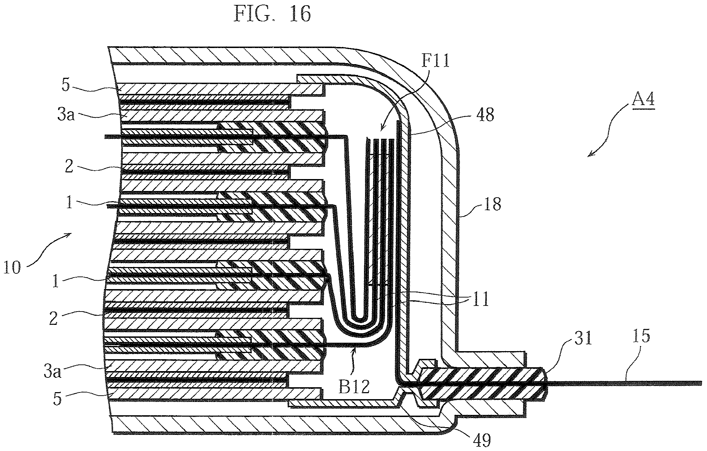

A battery A4 shown in Fig. 16 has such a configuration that the inner insulating layer is eliminated from the battery A3 shown in Fig. 15. In this battery A4, as well as in the foregoing battery A3 shown in Fig. 15, the thick-type insulating layer 48 and the thin-type insulating layer 49 prevent short circuiting between the metallic part and the laminate film 17, and at the same time, the thick-type insulating layer 48 also functions as the fastening means, so that the positive and negative electrode current collector leads 11 and 12 can be retained and positioned in a predetermined bent condition and that the deformation such that the bent portion unfolds can be effectively prevented.

### Other Embodiments

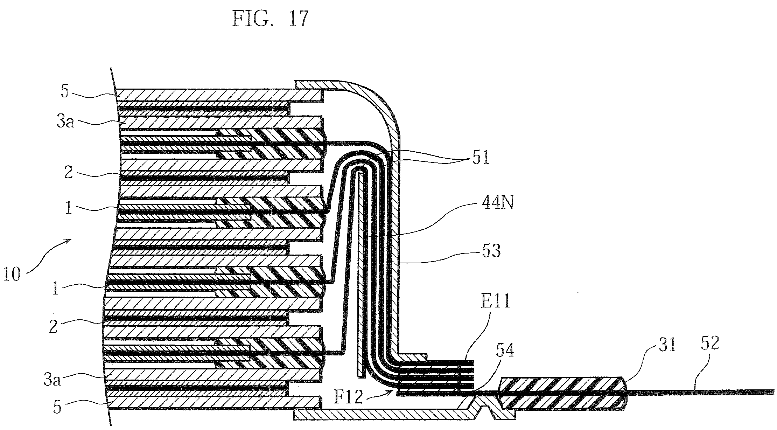

(1) In the first embodiment, both the positive electrode current collector leads 11 and the negative electrode current collector leads 12 are provided with the fastening tape 46 as the fastening means. However, it is possible that only one of the positive electrode current collector leads and the negative electrode current collector leads may be provided with the fastening means. In particular, the positive electrode current collector lead and the negative electrode current collector lead may be formed of a current collector lead made of an aluminum foil or a copper foil with a thickness of from about 10 µm to about 30 µm, so, depending on the material and the thickness, there is a current collector lead that is likely to cause the deformation such that the bent portion unfolds. Accordingly, it is desirable that such a current collector lead that is more likely to cause the deformation be provided with the fastening means.
(2) In the first embodiment, the positive and negative electrode current collector terminals 15 and 16 are bent in a hook shape viewed from side (in an L shape). In this case, sharp edges of the distal end portions of the positive and negative electrode current collector terminals 15 and 16 located inside battery case are strongly pressed against and brought into contact with the laminate film 17 during vacuum-sealing, and consequently, short circuiting is likely to occur between the sharp edges and the laminate film 17, as described above. Therefore, it is useful to provide an insulating layer at that location to prevent such short circuiting. However, it is also possible to employ positive and negative electrode current collector terminals that have no such bent portion. In this case, for example, it is possible to employ the following structure as illustrated in Fig. 17. The distal end portion of the positive and negative electrode current collector leads 51, which have been bundled in such a manner as to be gathered at one stacking direction-wise side (the upper side in Fig. 17) of the stacked electrode assembly 10 and bent toward the other side, is further bent so as to extend toward the current collector protruding side (rightward in Fig. 17). The extending portion E11 is joined to the positive and negative electrode current collector terminals 52 so as to overlap an end portion of the positive and negative electrode current collector terminals 52. In this case, sharp edges of a joint portion F12 between the positive and negative electrode current collector leads 51 and the positive and negative electrode current collector terminals 52 are likely to protrude at the outermost face portion on the valley side (on the lower side in Fig. 17) where the positive and negative electrode current collector leads 51 tend to unfold. For this reason, it is desirable that a thick-type insulating layer 54 be provided so that the joint portion F12 is covered from outside, and the thickness of the thick-type insulating layer 54 be greater than the thickness of an insulating layer 53 that covers the positive and negative electrode current collector leads 51 from the peak side.
(3) It is also possible to use a battery can, for example, as the battery case. However, the advantageous effects of the present invention are more significant in the case of using a film battery case, which has the problems of misalignment of the current collector terminals in the manufacturing process and formation of creases during vacuum-sealing. Furthermore, when using a laminate battery case comprising a laminate film among the film battery cases, the configuration of the present invention is more beneficial because it has the problem of, for example, short circuiting between the laminate film and the metal in the current collector.

For example, the laminate battery case may comprise:
aluminum, an aluminum alloy, stainless steel, or the like as the metal layer;
polyethylene, polypropylene, or the like as the inner layer (inside the battery); and
nylon, polyethylene terephthalate (PET), a layered film of PET/nylon, or the like as the outer layer (outside the battery).

(4) The positive electrode active material is not limited to lithium cobalt oxide. Other usable materials include lithium composite oxides containing cobalt, nickel, or manganese, such as lithium cobalt-nickel-manganese composite oxide, lithium aluminum-nickel-manganese composite oxide, and lithium aluminum-nickel-cobalt composite oxide, as well as spinel-type lithium manganese oxides.
(5) Other than the graphite such as natural graphite and artificial graphite, various materials may be employed as the negative electrode active material as long as the material is capable of intercalating and deintercalating lithium ions. Examples include coke, tin oxides, metallic lithium, silicon, and mixtures thereof.
(6) The electrolyte is not limited to that shown in the examples above, and various other substances may be used. Examples of the lithium salt include LiBF₄, LiPF₆, LiN(SO₂CF₃)₂, LiN(SO₂C₂F₅)₂, and LiPF₆₋ₓ(CₙF₂ₙ₊₁)ₓ (wherein 1 < x < 6 and n = 1 or 2), which may be used either alone or in combination. The concentration of the supporting salt is not particularly limited, but it is preferable that the concentration be restricted in the range of from 0.8 moles to 1.8 moles per 1 liter of the electrolyte solution. The types of the solvents are not particularly limited to EC and MEC mentioned above. Examples of preferable solvents include carbonate solvents such as propylene carbonate (PC), γ-butyrolactone (GBL), ethyl methyl carbonate (EMC), dimethyl carbonate (DMC), and diethyl carbonate (DEC). More preferable is a combination of a cyclic carbonate and a chain carbonate.

The present invention is suitably applied to, for example, power sources for high-power applications, such as backup power sources and power sources for the motive power incorporated in robots and electric automobiles.

While detailed embodiments have been used to illustrate the present invention, to those skilled in the art, however, it will be apparent from the foregoing disclosure that various changes and modifications can be made therein without departing from the spirit and scope of the invention. Furthermore, the foregoing description of the embodiments according to the present invention is provided for illustration only, and is not intended to limit the invention.

## Claims

1. A stack type battery comprising:
a stacked electrode assembly comprising a plurality of positive electrode plates having respective positive electrode current collector leads protruding therefrom, a plurality of negative electrode plates having respective negative electrode current collector leads protruding therefrom, and separators interposed between the positive electrode plates and the negative electrode plates, the positive electrode plates and the negative electrode plates being alternately stacked one another across the separators; wherein:
the stacked positive electrode current collector leads and the stacked negative electrode current collector leads are bundled in such a manner as to be gathered at one stacking direction-wise side of the stacked electrode assembly, and a portion of the bundled leads extending from a bundled portion toward a distal end of the bundled leads is bent toward the other stacking direction-wise side of the stacked electrode assembly; and
at least one of the positive electrode current collector leads and the negative electrode current collector leads is provided with a fastening means for retaining the portion of the bundled leads extending from the bundled portion toward the distal end of the bundled leads in a folded shape so as to be pulled toward the positive and negative electrode plates.

2. The stack type battery according to claim 1, wherein:
a positive electrode current collector terminal and a negative electrode current collector terminal having a hook shape viewed from side are respectively joined face to face to the positive electrode current collector leads and the negative electrode current collector leads; and
the joined surfaces of the positive and negative electrode current collector leads and the positive and negative electrode current collector terminals are substantially parallel to a stacking direction of the stacked electrode assembly.

3. The stack type battery according to claim 1 or 2, wherein the fastening means is electrically insulative.

4. The stack type battery according to claim 3, wherein:
the fastening means is an insulating tape; and
the insulating tape is provided so as to straddle a gap between the stacked electrode assembly and at least one of the positive electrode current collector terminal and the negative electrode current collector terminal, or a gap between the stacked electrode assembly and an insulating layer formed on at least one of the positive electrode current collector terminal and the negative electrode current collector terminal.

5. The stack type battery according to any one of claims 1 through 4, wherein an insulating layer is formed on an inner side of a bent portion of at least one of the positive electrode current collector leads and the negative electrode current collector leads.

6. The stack type battery according to claim 5, wherein the insulating layer formed on the inner side of the bent portion has a thickness of 40 µm or less.

7. The stack type battery according to any one of claims 1 through 6, wherein an insulating layer facing the battery case is formed at one stacking direction-wise side of the stacked electrode assembly at which the bundled portion is positioned, near at least one of the positive electrode current collector leads and the negative electrode current collector leads.

8. The stack type battery according to claim 7, wherein the insulating layer facing the battery case has a thickness of 70 µm or greater.

9. A method of manufacturing a stack type battery having a stacked electrode assembly comprising a plurality of positive electrode plates having respective positive electrode current collector leads protruding therefrom, a plurality of negative electrode plates having respective negative electrode current collector leads protruding therefrom, and separators interposed between the positive electrode plates and the negative electrode plates, the positive electrode plates and the negative electrode plates being alternately stacked one another across the separators, the method comprising:
a first step of bundling at least one of the stacked positive electrode current collector leads and the stacked negative electrode current collector leads in such a manner as to be gathered at one stacking direction-wise side of the stacked electrode assembly, and cutting an excess portion from a portion of the bundled leads extending from a bundled portion toward a distal end;
a second step of joining at least one of a positive electrode current collector terminal and a negative electrode current collector terminal to a distal end of at least one of the positive electrode current collector leads and the negative electrode current collector leads;
a third step of attaching an insulating tape from at least one side face to at least one joint portion of a joint portion between the positive electrode current collector leads and the positive electrode current collector terminal and a joint portion between the negative electrode current collector leads and the negative electrode current collector terminal;
a fourth step of bending, in a hook shape viewed from side, a portion of at least one of the positive electrode current collector terminal and the negative electrode current collector terminal that protrudes toward a distal end thereof from the joint portion between the positive electrode current collector leads and the positive electrode current collector terminal or the joint portion between the negative electrode current collector leads and the negative electrode current collector terminal; and
a fifth step of bending at least one of the joint portion between the positive electrode current collector leads and the positive electrode current collector terminal and the joint portion between the negative electrode current collector leads and the negative electrode current collector terminal so as to be substantially parallel to a stacking direction of the stacked electrode assembly, and attaching an insulating tape so as to straddle a gap between the stacked electrode assembly and at least one of the positive electrode current collector terminal and the negative electrode current collector terminal, or a gap between the stacked electrode assembly and an insulating layer formed on at least one of the positive electrode current collector terminal and the negative electrode current collector terminal.
